# EUROPÄISCHE PATENTSCHRIFT

(11) **EP 0 751 060 B1**
(45) Veröffentlichungstag und Bekanntmachung des Hinweises auf die Patenterteilung: **17.11.1999**
(21) Anmeldenummer: 96109729.2
(22) Anmeldetag: 18.06.1996
(51) Int. Cl.: B62D 51/00, B66F 9/20, B62B 3/06, B62B 5/06, G05G 1/24

(54) **Deichsel für kraftgetriebene Flurförderzeuge**
Drawbar for a power operated industrial truck
Timon pour un chariot de manutention motorisé

(30) Priorität: 30.06.1995 DE 19523921
(43) Veröffentlichungstag der Anmeldung: 02.01.1997
(73) Patentinhaber: Jungheinrich Aktiengesellschaft, 22047 Hamburg (DE)
(72) Erfinder: Prehn, Volkmar, 22846 Norderstedt (DE); Hestermann, Kai, 24114 Kiel (DE)
(74) Vertreter: Patentanwälte Hauck, Graalfs, Wehnert, Döring, Siemons

(56) Entgegenhaltungen:
- EP-A- 0 538 697
- US-A- 4 444 284

## Beschreibung

Die Erfindung bezieht sich auf eine Deichsel für kraftgetriebene Flurförderzeuge nach dem Oberbegriff des Patentanspruchs 1.

Hubwagen oder Hublader im Mitgehbetrieb weisen eine Deichsel auf, mit der das Förderzeug gelenkt wird. Die Anlenkung der Deichsel erfolgt an der Halterung für das verschwenkbare Antriebsrad des Förderzeugs. Am freien Ende ist ein Deichselkopf vorgesehen, der mehrere Betätigungsorgane aufweist zum Betrieb des Förderzeugs. Die letzteren umfassen einen Fahrschalter, Tasten für den Heb- und Senkbetrieb, die Hupe sowie einen Körperschutzschalter.

Es ist bekannt, den Deichselkopf mit einem Horn in Verlängerung des Deichselstiels zu versehen, an dem beidseits Griffe angebracht sind. Die Betätigungsschalter sind am Horn gelagert. Aus der EP 0 371 227 oder der EP 0 371 226 ist bekannt, die Griffe an einem Schutzbügel anzubinden, der aus beidseits sich vom Horn quererstreckenden Tragabschnitten und von annähernd parallel zu Horn verlaufenden Schenkelabschnitten gebildet ist. Die Griffe sind mit den Schenkelabschnitten verbunden, wodurch sich beidseits des Horns Grifföffnungen ergeben. Zwischen dem Griff und dem Horn sind auf beiden Seiten Fahrschaltergriffe angeordnet, die mit dem Daumen um eine Achse verdreht werden können, die annähernd mit der Achse der Griffe zusammenfällt. Die Schalttasten für den Heb- und Senkbetrieb sind in dem Abschnitt des Horns untergebracht, der über die Griffe nach hinten hinaussteht.

Aus der Firmenschrift Atlet Elektro-Deichselhubwagen (LL) ist bekanntgeworden, in einer Fläche des Horns, die im Bereich der Tragabschnitte dem Fahrer zugekehrt ist, auf zwei gegenüberliegenden Schalttasten zur Betätigung des Hub- und Senkbetriebes vorzusehen. Die Schalttasten werden mit der Fingerkuppe betätigt, indem ein Druck durch Ausstrecken der Finger ausgeübt wird (Öffnen der Hand am Griff).

Aus der Firmenschrift ROCLA-ELEKTRO-GEH-GABELHUBWAGEN RHE-14 ist eine Deichsel für kraftgetriebene Flurförderzeuge, hier eines Hubwagens, bekannt geworden, der die Merkmale der Deichsel der eingangs genannten Art enthält. Sie umfassen beidseits eines Horns in Verlängerung des Deichsels sich erstreckende stangenartige Griffe, einen am Horn schwenkbar gelagerten Fahrschaltergriff, der eine vom Griff fortweisende Mulde zur Betätigung mit dem Daumen aufweist, wobei die Griffe über an den äußeren Enden der Griffe angebundene und sich annähernd parallel zum Horn erstreckende Schenkelabschnitte und über mit den Schenkelabschnitten verbundene Trägerabschnitte mit dem Horn bzw. dem Stiel verbunden sind. Die Schenkel- und Trägerabschnitte bilden einen Schutzbügel mit Grifföffnungen. Beidseits des Horns sind Schalttasten angebracht an einer Fläche der Trägerabschnitte, die zur Vertikalen geneigt schräg in Richtung der Griffe abfallen. Die Schalttasten für das Heben und Senken liegen übereinander, so daß der Bediener bei Betätigung einer dieser Funktionstasten den Griff mehr oder weniger freigeben muß. Die Anordnung der Schalttasten ist überdies so, daß sie durch ein 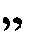 Stoßen" oder 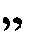 Bohren" mit dem Finger in Richtung der Schalttaste zu betätigen sind. Eine solche Betätigung ist ergonomisch ungünstig und ermüdend. Außerdem besteht das Problem, daß der Bediener mit dem Fingernagel gegen die die Schalttasten enthaltende Fläche stößt und sich verletzen bzw. keine ausreichende Betätigung vornehmen kann.

Der Erfindung liegt die Aufgabe zugrunde, eine Deichsel für krafigetriebene Flurförderzeuge zu schaffen, bei der der Deichselkopf so gestaltet ist, daß alle Bedienfunktionen mit einer Hand sinnfällig und mühelos betätigt werden können. Darüber hinaus soll eine gleichzeitige Betätigung mehrerer Bedienfunktionen mit nur einer Hand ermöglicht werden, ohne daß die Bedienerhand vom Deichselgriff gelöst werden muß.

Diese Aufgabe wird durch die Merkmale des Patentanspruchs 1 gelöst.

Bei dem erfindungsgemäßen Deichselkopf sind die Schalttasten in Reihe nebeneinander in einer vom Horn auch zur Seite hin abfallenden Fläche so angeordnet, daß sie durch Ausstrecken eines Fingers einer den Griff erfassenden Hand in der Richtung der natürlichen Greifbewegung von der Fingerkuppe ergonomisch güntig betätigbar sind. Vorzugsweise sind jeweils drei Bedientasten auf jeder Seite des Horns angeordnet, wobei die Bedientasten vorzugsweise rechteckige Tastknöpfe sind, die unmittelbar benachbart nur geringfügig aus der Fläche hervorstehen. Die Schalttastenreihen sind nicht parallel zum Griff, sondern in einem Winkel angeordnet, wobei sie auf beiden Seiten des Horns einen stumpfen Winkel einschließen derart, daß sie von den Griffen fort divergieren. Eine derartige Ausbildung des Deichselkopfes ermöglicht nicht nur eine ergonomisch besonders günstige Betätigung der Bedientasten während des Normalbetriebes, sondern auch eine 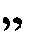 blinde" Bedienung von jeweils einer Hand, also auch wenn der Bediener sich von der Deichsel abwendet und dem Fahrzeug vorangeht.

Nach einer Ausgestaltung der Erfindung ist die die Schalttasten enthaltende Fläche von einer Mulde gebildet, die sich zwischen einem Schenkelabschnitt und dem Horn bzw. dem Stiel erstreckt. Die Mulde hat sowohl zur Seite, d. h. vom Horn weg, ein Gefälle als auch eine Neigung in Richtung Bediener. Dies ermöglicht die Anordnung der Schalttastenreihe für eine ergonomisch sinnvolle Betätigung auf erfindungsgemäße Art und Weise. Vor allen Dingen ermöglicht die Erfindung eine ergonomische Betätigung der Tasten, ohne daß der Griff losgelassen werden muß.

Nach einer Ausgestaltung der Erfindung liegen die Schalttasten vorzugsweise an der vorzugsweise geraden Kante der Mulde, welche die Grifföffnung in diesem Bereich begrenzt.

Nach einer anderen Ausgestaltung der Erfindung ist der obere Abschnitt des Horns erhaben gegenüber der Ebene, die aus Griff und Schenkelabschnitt gebildet ist, so daß die dem Horn nächstliegende Schalttaste geringfügig oberhalb des Griffes liegt.

Nach einer weiteren Ausgestaltung der Erfindung sind die Tragabschnitte im Querschnitt gerundet was an sich bekannt ist. Erfindungsgemäß verjüngen sich jedoch die Tragabschnitte in Richtung Schenkelabschnitt. Auf diese Weise ergibt sich ein gekrümmter Verlauf der Tragabschnitte im Bereich der Grifföffnungen, die sich daher in Richtung Horn verengen. Auf der Außenseite sind die Tragabschnitte bogenförmig, bilden mithin eine abweisende und ablenkende Fläche beim Auftreffen auf ein Hindernis. Im Querschnitt ist dieser Bereich ebenfalls gerundet.

Auch die Schenkelabschnitte sind zur Grifföffnung hin vorzugsweise. mit gerundetem Querschnitt versehen, weisen jedoch nach einer Ausgestaltung der Erfindung außen eine Abflachung auf. Dadurch läßt sich die Gesamtbreite des Deichselkopfes verringern.

Nach einer anderen Ausgestaltung der Erfindung verlaufen die Griffe auf einer gebogenen Linie, deren Kreismittelpunkt auf der dem Deichselstiel zugekehrten Seite liegt. Außerdem kann nach einer anderen Ausgestaltung der Erfindung die Ebene aus Griff- und Schenkelabschnitt vom Griff fort schräg nach unten geneigt sein, was der natürlichen Handhaltung in der Arbeitsstellung der Deichsel entgegenkommt.

Nach einer anderen Ausgestaltung der Erfindung weist die Oberseite und die vom Fahrer fortweisende Seite des Fahrschaltergriffes eine Ablagefläche für den Zeigefinger der den Griff umfassenden Hand auf. Die Ablagefläche ist in Drehrichtung des Fahrschaltergriffes gekrümmt. Dadurch bildet der Fahrschalter eine Fortsetzung des Griffes in Richtung Deichselhorn. Die Grifföffnung kann daher weiter in Richtung Horn verlegt werden, wodurch die Breite des Deichselkopfes reduziert werden kann. Damit ein hindernisfreier Übergang zwischen Griff und Ablagefläche erhalten wird, ist diese mit einem Gefälle in Richtung Griff ausgebildet. Außerdem kann die Grifffläche im Querschnitt konkav sein, um eine bessere Anpassung an den Zeigefinger zu ermöglichen.

Der Fahrschaltergriff weist auf der dem Fahrer zugekehrten Seite eine Daumenmulde auf, so daß er betätigt werden kann, während die Hand den Griff erfaßt. Dieses Merkmal ist an sich bekannt. Erfindungsgemäß ist nun der obere Bodenabschnitt der Daumenmulde schmaler als der untere. Auf diese Weise ist die Betätigung des Fahrschaltergriffes erleichtert, insbesondere, wenn der Fahrer sich vom Deichselkopf fort abwendet. Bei dieser Bewegung wird der Daumen automatisch weiter vom Fahrschaltergriff entfernt, auch wenn die Hand nach wie vor den Griff erfaßt. Dadurch, daß der untere Bereich der Griffmulde breiter ausgeführt ist, ist gleichwohl noch eine ergonomisch günstige Betätigung durch den Daumen möglich.

Der erfindungsgemäße Deichselkopf besteht nach einer weiteren Ausgestaltung der Erfindung vorzugsweise aus zwei Teilen mit einem Unterteil und einem Oberteil, wobei die Teilung in einer vom vorderen bis zum hinteren Ende verlaufenden Ebene des Horns erfolgt. Das Unterteil ist als tragendes Teil ausgeführt und weist die Griffe, die Schenkelabschnitte, tragende Teile der Tragabschnitte sowie Aufnahmen für den Fahrschalter und die Schutztaste bzw. den tragenden Teil des Horns auf. Das Unterteil und/oder das Oberteil sind vorzugsweise einteilig aus Kunststoffmaterial geformt. Bei der Formung werden Griffe, Winkelabschnitte und/oder tragende Teile der Trägerabschnitte hohl ausgebildet, was Material spart. Insbesondere die hohle Ausführung der Griffe vermeidet unschöne und für das Greifen unangenehme Nähte, die zwangsläufig bei mehrteiligen Formwerkzeugen entstehen. Die hohle Ausbildung der Teile erfolgt in bekannter Weise durch Gasdruck. Der tragende Teil des Horns bzw. die Aufnahmen für Schutzschalter und Fahrschalter sind nach einer Ausgestaltung der Erfindung durch zwei beabstandete Stege an den tragenden Teil der Trägerabschnitte angeformt. Dadurch wird einerseits eine ausreichende steife Anbindung erhalten, andererseits Material gespart. Das Oberteil ist als Schale ausgebildet zur Abdeckung eines Teils der Tragabschnitte und des Horns und weist die muldenartigen Flächen auf, welche die Tastenanordnung aufnimmt. Unter- und Oberteil können durch eine einfache Schraubbefestigung miteinander verbunden sein.

Ein Ausführungsbeispiel der Erfindung wird nachfolgend anhand von Zeichnungen näher erläutert.
- Fig. 1: zeigt perspektivisch die Seitenansicht eines Deichselkopfs nach der Erfindung.
- Fig. 2: zeigt die Ansicht des Deichselkopfes nach Fig. 1 in Richtung Pfeil 2.
- Fig. 3: zeigt die Ansicht des Deichselkopfes nach Fig. 1 in Richtung Pfeil 3.
- Fig. 4: zeigt perspektivisch einen Fahrschaltergriff des Deichselkopfes nach den Figuren 1 bis 3.
- Fig. 5: zeigt die Seitenansicht des Griffes nach Fig. 4
- Fig. 6: zeigt die Ansicht des Griffes nach Fig. 5 in Richtung Pfeil 6.
- Fig. 7: zeigt die Draufsicht auf das Unterteil des Deichselkopfes nach den Figuren 1 bis 3.
- Fig. 8: zeigt die Draufsicht auf das Oberteil des Deichselkopfes nach den Figuren 1 bis 3.
- Fig. 9: zeigt perspektivisch den Deichselkopf nach den Fig. 1 bis 3 bei der Betätigung von einer Hand.

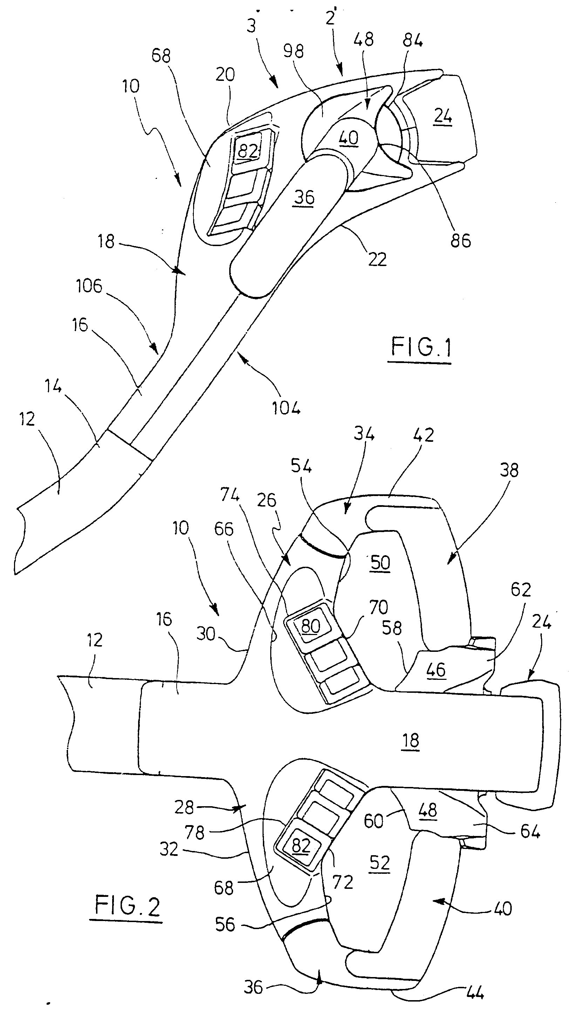

Der in den Figuren 1 bis 3 dargestellte Deichselkopf 10 gehört zur nicht weiter dargestellten Deichsel eines nicht dargestellten Hubwagens oder dergleichen. Die Deichsel ist durch das Ende ihres Stiels 12 angedeutet. Wie erkennbar, ist am Ende des Stiels bei 14 eine Biegung nach oben vorgenommen. In dieser Richtung erstreckt sich auch der stielseitige im Querschnitt annähernd rechteckförmige Abschnitt 16 des Deichselkopfes, der auf geeignete Weise mit dem Stiel 12 verbunden ist.

Der Deichselkopf 10 weist in Verlängerung des stielseitigen Abschnitts 16 ein Horn 18 auf, das in Draufsicht annähernd Rechteckform hat, in Seitenansicht jedoch nach oben eine Buckelform, wie durch die Konturlinie 20 angedeutet. An der Unterseite ist das Horn in der Seitenansicht konkav, wie durch die Konturlinie 22 angedeutet. Dadurch erhält das Horn 18 im hinteren, dem Bediener zugewandten Teil eine Ausrichtung, die etwa der Achse des Stiels 12 parallel ist.

Die Seiten des freien Endes des Horns 18 umgreifend, oben und unten jedoch vom Horn ausgenommen, ist eine kastenförmige Schalttaste 24 vorgesehen, die einen Körperschutzschalter betätigt. Die Taste 24 ist so gelagert (nicht gezeigt), daß eine Berührung aus den verschiedensten Richtungen zu einer Schalterbetägigung führt.

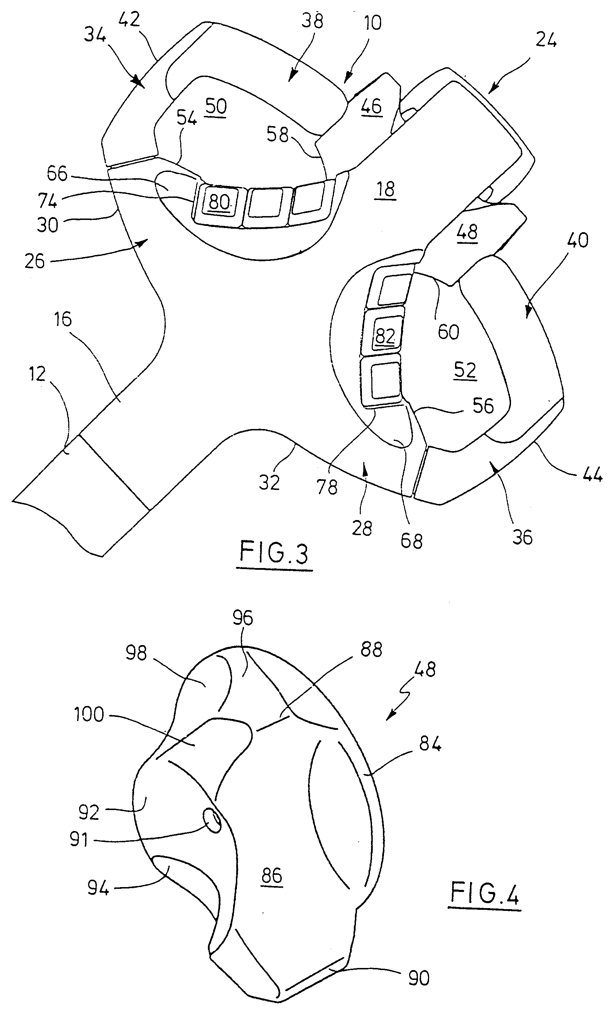

Am Übergangsabschnitt zwischen stielseitigem Abschnitt 16 und Horn 18 sind von Horn 18 seitlich abgehend Tragabschnitte 26, 28 vorgesehen, die sich nach außen hin verjüngen. Die Tragabschnitte sind in Richtung Deichsel 12 bogenförmig konkav, wie bei 30 bzw. 32 gezeigt und in diesem Bereich im Querschnitt mit einer annähernd kreisförmigen Kontur versehen. Sie gehen im übrigen über weiche Übergangsflächungen und -rundungen in das Horn 18 bzw. den Abschnitt 16 über. An den Enden der Tragabschnitte 26, 28 sind Schenkelabschnitte 34, 36 angebunden, die sich annähernd parallel zum Horn 18 in Richtung Bedienerseite erstrecken und mit stangenartigen Griffen 38, 40 verbunden sind. Die Schenkelabschnitte 34, 36 sind auf der dem Horn 18 zugewandten Seite im Querschnitt annähernd kreisbogenförmig, während sie an der Außenseite abgeflacht sind, wie bei 42, 44 in den Figuren 2 und 3 angedeutet.

Die Griffe 38, 40, die auf einer Kreisbogenlinie liegen, deren Kreismittelpunkt auf der Seite des Stiels 12 liegt, erstrecken sich in Richtung Horn 18 bis zu Fahrschaltergriffen 46, 48, die um eine Achse senkrecht zum Horn an der vertikal laufenden Außenseite des Horns um eine horizontale Achse drehbar gelagert sind. Die Drehachse entspricht annähernd der Achse der Griffe 38, 40 nahe den Griffen 46, 48. Auf die Form der Fahrschaltergriffe 46, 48 wird weiter unten näher eingegangen.

Man erkennt, daß durch die beschriebenen Teile Grifföffnungen 50, 52 geschaffen sind für die Finger einer Hand, welche den Griff 38 bzw. 40 von hinten und schräg oben erfaßt. Die Grifföffnungen 50, 52 haben die größte Breite in der Ebene von Schenkelabschnitten 34, 36 und Griffen 38, 40 annähernd in der Längsmitte von Tragabschnitt 26, 28 bzw. Griff 38, 40, wobei sie sich zum Horn 18 hin und zu den Schenkelabschnitten 34, 36 hin allmählich bogenförmig verengen. Die Bogenform ergibt sich aus der Krümmung der Griffe 38, 40 und der entsprechenden konkaven Krümmung der Tragabschnitte, wie durch die Konturlinien 54, 56 angedeutet. Eine weitere Krümmung ergibt sich durch die Konturlinie 58 bzw. 60 des Fahrschaltergriffes 46 bzw. 48 im Bereich einer Zeigefingerauflagerfläche 62 bzw. 64 (auf letztere wird nachstehend noch näher eingegangen).

In die Tragabschnitte 26, 28 sind Mulden 66, 68 eingeformt. Sie erstrecken sich am Fuß des Horns 18 und von seiner Oberseite entlang den Tragabschnitten 26, 28 in Richtung Schenkelabschnitte 34, 36. Wie in Fig. 1 zu erkennen, haben die Mulden 66, 68 ein Gefälle in Richtung Schenkelabschnitte 34, 36. Sie haben außerdem ein Gefälle in Richtung Griffe 38, 40. Angrenzend an die Grifföffnungen 50, 52 haben die Mulden 66, 68 eine annähernd gerade Kante 70 bzw. 72, welche eine im wesentlichen rechteckige Ausnehmung 74, 78 zur Grifföffnung 50 bzw. 52 begrenzt. In der Ausnehmung 70, 72 sind unmittelbar benachbart drei Schalttasten 80, 82 in Reihe nebeneinander angeordnet. Wie sich aus Fig. 1 und 3 ergibt, ist der Verlauf der Reihe der Schalttasten 80 bzw. 82 annähernd dem Verlauf des Muldengrundes angepaßt, und die Schalttasten 80, 82 stehen nur geringfügig über den Grund der Mulde 66 bzw. 68 vor. Die Reihe der Schalttasten 80, 82 macht daher das Gefälle in Richtung Schenkelabschnitte 34, 36 mit. Die Schalttasten 80, 82 liegen auf einem Kreisbogen, dessen Zentrum außerhalb der Mulde 66, 68 liegt, wobei die Achsen der Tasten 80, 82 sich etwa im Zentrum schneiden.

Aus den Figuren 2 und 3 ist zu erkennen, daß die Reihen der Schalttasten 80, 82 einen Winkel zueinander bilden derart, daß sie von den Griffen 38, 40 fort divergieren bzw. in Richtung der Griffe 38, 40 konvergieren.

Aus Fig. 1 wird deutlich, daß die Schenkelabschnitte 34, 36 und die Griffe 38, 40 in einer Ebene liegen, die annähernd mit der Achse des Stielendabschnitts 14 zusammenfällt und einen Winkel zur Achse des Stiels 12 einschließt, der nach unten gerichtet ist, etwa um einen Betrag von 20°. Der Winkel, den die Griffe 38, 40 einschließen, beträgt etwa 160°.

Wie schon angedeutet, betätigen die Fahrschaltergriffe 46, 48 beide einen Schalter zur Regelung der Fahrgeschwindigkeit des nicht gezeigten Förderzeugs. Die Schalttasten 80, 82 dienen zum Heben und Senken und zum Hupen, wobei, wie ohnehin erkennbar, die Funktionen auf beiden Seiten des Kopfes 10 redundant ausgeführt sind. Selbstverständlich ist auch möglich, eine Seite des Deichselkopfes "blind" auszuführen. Die Hupe wird vorzugsweise von der am weitesten außen liegenden Schalttaste 80 bzw. 82 betätigt.

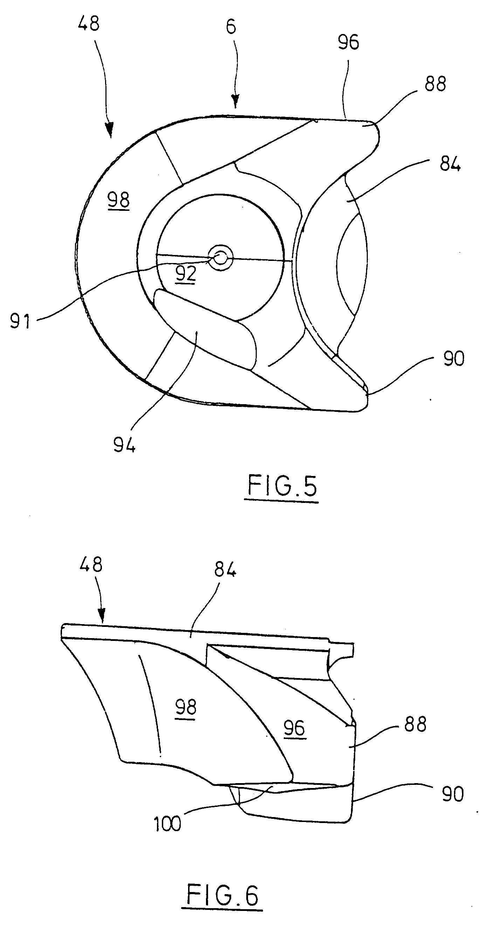

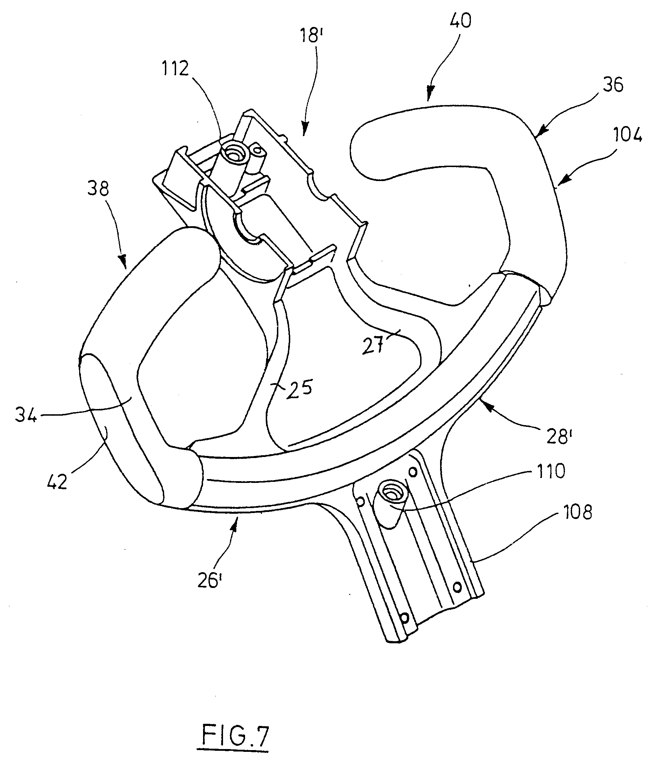

In den Figuren 4 bis 6 ist der Fahrschalter 48 vergrößert dargestellt. Er weist auf einer Seite einen scheibenförmigen Abschnitt 84 auf, der der entsprechenden ebenen Fläche an der Seite des Horns 18 zugekehrt ist. Nach hinten in Richtung Bediener ist eine Griffmulde 86 eingeformt, welche durch annähernd radial vorspringende Abschnitte 88 bzw. 90 begrenzt ist. Die Vorsprünge 88, 90 schließen einen Winkel von etwa 70 bis 80° ein. Beim Erfassen eines Griffes 40 gelangt der zugehörige Daumen der Hand in die Griffmulde 86 und kann daher den Griff 48 in beiden Drehrichtungen betätigen. Wie aus Fig. 4 und 6 hervorgeht, ist die axiale Erstreckung des Vorsprungs 90 deutlich größer als die des oberen Vorsprungs 88, so daß der Boden der Mulde 86 vom unteren Vorsprung 90 zum oberen 88 sich allmählich verschmälert. Auf der dem Scheibenabschnitt 84 gegenüberliegenden Seite weist der Griffkörper 48 eine kugelige Ausnehmung 92 auf, in die das kugelförmige Ende der Griffe 38, 40 (siehe auch Fig. 7) hineinsteht, jedoch mit Abstand. Der untere Rand der Ausnehmung 92 weist einerseits eine Aussparung 94 auf, durch welche die Montage des Griffkörpers 48 ermöglicht wird. Eine Bohrung 91 dient zur Aufnahme eines Lagerstiftes.

In Richtung vom Bediener fort schließt sich an den Vorsprung 88 eine ebene Fläche 96 an, an die sich eine Zeigefingerablagemulde 98 anschließt. Eine Schrägfläche 100 erstreckt sich von der oberen ebenen Fläche 96 in Richtung Ausnehmung 92 entsprechend der Verbreiterung des Bodens der Daumenmulde 86.

Wie aus Fig. 5 hervorgeht, erstreckt sich die Fingermulde 98 annähend über 180° des Griffkörpers 48. Sie ist im Querschnitt leicht konkav und fällt von der Höhe des Scheibenabschnitts 84 in Richtung Ausnehmung 92 kontinuierlich ab. Die Fingerablagefläche 98 (in Fig. 2 und 3 Position 62, 64) ist so geformt, daß bei Erfassen eines Griffes, zum Beispiel Griff 40 von einer Hand der Zeigefinger sich auf der Fläche 98 mehr oder weniger gekrümmt auflegen kann. Mithin bildet die Auflagefläche 98 eine Verlängerung des Griffes 40 in Richtung Horn 18. Insgesamt ist die Auflagefläche 98 so geformt, daß sie eine Fortsetzung der Kontur des Griffes 40 bildet, wie sich aus den Figuren 1 bis 3 ergibt.

Die in den Figuren 1 bis 3 dargestellten Konturen des Deichselgriffes sind derart, daß bei Ergreifen eines Griffes 38, 40 von einer Hand die Schalttasten 80 bzw. 82 mit einem Finger in Greifhaltung leicht betätigt werden können, ohne daß der Griff 38 bzw. 40 losgelassen wird. Durch Daumenbetätigung kann gleichzeitig der Fahrschaltergriff 46 bzw. 48 in der einen oder anderen Drehrichtung betätigt werden. Die Betätigung des Fahrschaltergriffes 46, 48 ist auch dann noch ergonomisch optimal, wenn der Bediener sich von der Deichsel abwendet.

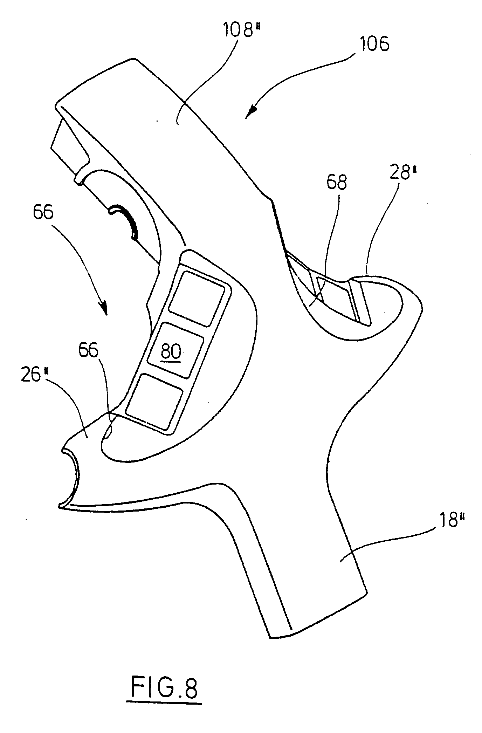

Der Deichselkopf nach den Figuren 1 bis 3 besteht aus zwei Teilen, nämlich einem Unterteil 104 und einem Oberteil 106, die nachstehend anhand der Figuren 7 und 8 näher beschrieben werden sollen. Soweit in den Figuren 1 bis 3 wiedergegebenen Teile dargestellt sind, werden gleiche Bezugszeichen verwendet.

Wie aus den Figuren 7 und 8 hervorgeht, ist das Unterteil 104 als tragendes Teil ausgebildet mit dem Hornunterteil 18', den angeformten Tragabschnittunterteilen 26', 28', den Schenkelabschnitten 34, 36 und den Griffen 38, 40. Das Hornunterteil 18' ist über zwei sich in Richtung von Tragabschnitten 26', 28' dreieckförmig angeordneten Stegen 27, 25 an dem letzteren angebracht. Eis bildet entsprechende Aufnahmen für die Fahrschalter 46, 48 sowie die Körperschutztasten 24. Die Griffe 38, 40, die Schenkelabschnitte 34, 36 und auch die Tragabschnitte 26', 28' sind bei der Formung im Kunststoffspritzwerkzeug hohl geformt. Dies geschieht mit Hilfe des Aufbaus eines entsprechenden Gasdrucks. Dadurch weisen insbesondere die Griffe 38, 40 keine störende Formnaht auf und bedürfen daher auch keiner besonderen Beschichtung, um den Griff handlich zu machen.

Auf der anderen Seite der Tragabschnittunterteile 26', 28' ist ein Befestigungsansatz 108 geformt, mit dem der Deichselkopf am Stiel 12 der im übrigen nicht gezeigten Deichsel befestigbar ist. Wie aus Fig. 7 hervorgeht, ist am Ansatz 108 und am Deichselkopfunterteil eine Befestigungsbuchse 110 bzw. 112 geformt für eine nicht gezeigte Befestigungsschraube.

Das in Fig. 7 dargestellte Deichselkopfunterteil 104 ist insgesamt einteilig aus Kunststoff gefertigt.

In Fig. 8 ist das Oberteil 106 zu erkennen. Es ist schalenartig geformt und überdeckt Ansatz 108, Unterteil 18' des Horns. Diese Teile sind in Fig. 8 mit 18'' und 108'' bezeichnet. Es überdeckt ferner die Tragabschnittunterteile 26', 28'. Die entsprechenden Abschnitte sind in Fig. 8 mit 26'' und 28'' bezeichnet. Unterteil 104 und Oberteil 106 werden mittels zwei in die Ansätze 110, 112 eingeschraubter Schrauben miteinander verbunden.

Das Oberteil 106 ist ebenfalls einteilig aus Kunststoff geformt.

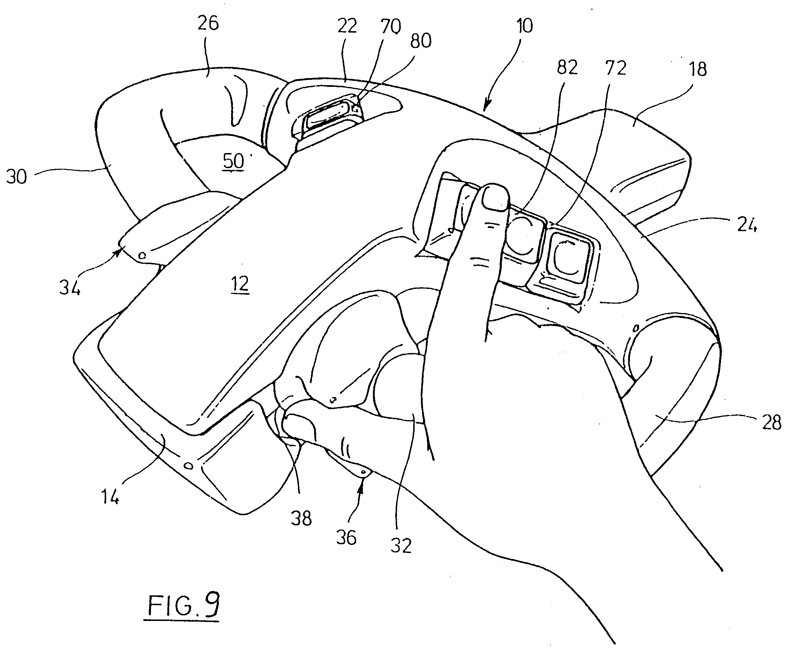

Wie sich aus Fig. 9 ergibt, ist die Anordnung der Tasten 80, 82 und der Fahrschalter 34, 36 derart, daß die Finger die Tasten 80, 82 in Richtung der natürlichen Greifbewegung durch Herunterdrücken der Fingerkuppe betätigen. Diese Betätigung ist bei gleichzeitigem Halten eines Griffes 30, 32 und bei gleichzeitiger Betätigung auch des Fahrschalters über den Daumen möglich. Die gezeigte und beschriebene Betätigung kann sowohl bei einem voraus- als auch bei einem hinterhergeführten Fahrzeug stattfinden, d.h. also auch "blind". Bei einer derartigen Betätigung ist es auch möglich, den Finger auf der Taste aufliegen zu lassen, ohne daß dies für den Bediener eine Anstrengung bedeutet und zur Ermüdung führt. Diese ergonomisch vorteilhaften Betätigungsmöglichkeiten ergeben sich aus der beschriebenen sinnfälligen Anordnung der Funktionsschalter im Hinblick auf Griff und Horn.

## Patentansprüche

1. Deichsel für kraftgetriebene Flurförderzeuge, mit einem Deichselstiel (12), einem am freien Ende des Deichselstiels (12) angeordneten Deichselkopf (10), bestehend aus einem in Verlängerung des Deichselstiels (12) angeordneten Horn (18), beidseits des Horns (18) sich annähernd quer zum Horn (18) erstreckenden stangenartigen Griffen (38, 40), einem am Horn schwenkbar gelagerten Fahrschaltergriff (46, 48), der eine vom Griff fortweisende Mulde (86) zur Betätigung mit dem Daumen aufweist, wobei die Griffe (38, 40) über an den äußeren Enden der Griffe (38, 40) angebundene und sich annähernd parallel zum Horn (18) erstreckende Schenkelabschnitte (34, 36) und über mit den Schenkelabschnitten (34, 36) verbundene Trägerabschnitte (26, 28) mit dem Horn (18) bzw. dem Stiel (12) verbunden sind und die Schenkel- und Trägerabschnitte einen Schutzbügel mit Grifföffnungen (50, 52) bilden, mindestens zwei Schalttasten (80, 82) auf jeder Seite des Horns (18), die in Flächen (66, 68) der Trägerabschnitte (26, 28) angebracht sind, die zur Vertikalen geneigt schräg in Richtung der Griffe (38, 40) hin abfallen, dadurch gekennzeichnet, daß die Flächen (66, 68) der Trägerabschnitte (26, 28) auch zur Seite hin abfallen, die Schalttasten (80, 82) in Reihe nebeneinander angeordnet sind und die Schalttastenreihen (80, 82) beidseits des Horns (18) im stumpfen Winkel angeordnet sind derart, daß sie in Richtung der Griffe (38, 40) konvergieren, um eine ergonomisch günstige Betätigung zu ermöglichen.

2. Deichsel nach Anspruch 1, dadurch gekennzeichnet, daß rechteckige Tastknöpfe (80, 82) vorgesehen sind, die unmittelbar benachbart geringfügig aus der Fläche (66, 68) hervorstehen.

3. Deichsel nach Anspruch 1 oder 2, dadurch gekennzeichnet, daß drei Schalttasten (80, 82) auf jeder Seite des Horns (18) angeordnet sind.

4. Deichsel nach einem der Ansprüche 1 bis 3, dadurch gekennzeichnet, daß die Flächen von einer sich zwischen dem Horn (18) bzw. dem Stiel (12) und Schenkelabschnitt (34, 36) erstreckenden Mulde (66, 68) gebildet sind.

5. Deichsel nach Anspruch 4, dadurch gekennzeichnet, daß die dem Griff (38, 40) zugewandte annähernd gerade Muldenkante (70, 72) zugleich die Grifföffnung (50, 52) auf seiten des Trägerabschnitts (26, 28) begrenzt und die Schalttasten (80,82) nahe der Muldenkante (70, 72) angeordnet sind.

6. Deichsel nach einem der Ansprüche 1 bis 5, dadurch gekennzeichnet, daß die Achsen der Schalttasten auf einer Seite des Horns (18) nach oben konvergieren, vorzugsweise in einem Punkt, der dem Kreismittelpunkt für den Kreis entspricht, auf dem die Taste liegt bzw. den die Mulde beschreibt.

7. Deichsel nach einem der Ansprüche 1 bis 6, dadurch gekennzeichnet, daß der obere Abschnitt (20) des Horns (18) über der aus Griff (38, 40) und Schenkelabschnitten (34, 36) gebildeten Ebene erhaben ist und die dem Horn (18) nächstgelegene Schalttaste (80, 82) annähernd an die Oberseite (20) des Horns (18) angrenzt.

8. Deichsel nach einem der Ansprüche 1 bis 7, dadurch gekennzeichnet, daß die Trägerabschnitte (26, 28) als im Querschnitt gerundete Ansätze des Horns (18) gebildet sind, die sich vom Horn (18) fort stetig verjüngen.

9. Deichsel nach Anspruch 8, dadurch gekennzeichnet, daß die Trägerabschnitte (26, 28) auf der der Grifföffnung (50, 52) gegenüberliegenden Seite konvex gebogen und im Querschnitt annähernd kreisförmig gerundet sind.

10. Deichsel nach einem der Ansprüche 1 bis 8, dadurch gekennzeichnet, daß die Schenkelabschnitte (34, 36) zur Grifföffnung (50, 52) hin einen gerundeten Querschnitt aufweisen, der nach außen eine Abflachung (42, 44) aufweist.

11. Deichsel nach einem der Ansprüche 1 bis 10, dadurch gekennzeichnet, daß die Trägerabschnitte (26, 28) zur Grifföffnung (50, 52) hin einen gerundeten Querschnitt aufweisen.

12. Deichsel nach einem der Ansprüche 1 bis 11, dadurch gekennzeichnet, daß die außen liegenden Abschnitte der Trägerabschnitte (26,28) im stumpfen Winkel so zueinander angeordnet sind, daß sie in Richtung der Griffe (38, 40) divergieren.

13. Deichsel nach einem der Ansprüche 1 bis 12, dadurch gekennzeichnet, daß die Griffe (38, 40) auf einer gebogenen Linie verlaufen, deren Kreismittelpunkt auf der dem Stiel (12) zugekehrten Seite liegt.

14. Deichsel nach einem der Ansprüche 1 bis 13, dadurch gekennzeichnet, daß die Ebene aus Griff (38, 40) und Schenkelabschnitt (34, 36) in der Arbeitsstellung des Stiels (12) vom Griff (38, 40) fort schräg nach unten geneigt ist.

15. Deichsel nach einem der Ansprüche 1 bis 14, dadurch gekennzeichnet, daß die Oberseite und die vom Bediener fortweisende Seite des Fahrschaltergriffes (46, 48) eine in Drehrichtung des Fahrschaltergriffes gekrümmte Ablagefläche (98) für den Zeigefinger der den Griff (38, 40) umfassenden Hand aufweist.

16. Deichsel nach Anspruch 15, dadurch gekennzeichnet, daß die Ablagefläche (98) eine zum Horn (18) hin ansteigende Verlängerung des Griffes (38, 40) bildet.

17. Deichsel nach einem der Ansprüche 1 bis 16, dadurch gekennzeichnet, daß der Fahrschaltergriff (46, 48) auf der dem Bediener zugekehrten Seite eine Daumenmulde (86) aufweist, deren nach oben weisender Bodenwandabschnitt schmaler als der nach unten weisende Bodenabschnitt ist und die seitliche Begrenzung des Fahrschaltergriffes (46, 48) im Bereich des schmalen Bodenwandabschnitts von einer Schrägfläche (100) gebildet ist mit einem Gefälle in Richtung Griff (38, 40).

18. Deichsel nach einem der Ansprüche 1 bis 16, dadurch gekennzeichnet, daß das freie Ende des Griffes (38, 40) halbkugelförmig ist und in eine annähernd halbkugelförmige Ausnehmung des Fahrschaltergriffs (46, 48) hineinsteht.

19. Deichsel nach einem der Ansprüche 1 bis 18, dadurch gekennzeichnet, daß ein Abschnitt des Horns (18) über die Fahrschaltergriffe (46, 48) vorsteht und in die Stirnseite des vorstehenden Abschnitts eine Schaltkappe (24) für einen Körperschutzschalter eingesetzt ist.

20. Deichsel nach einem der Ansprüche 1 bis 19, dadurch gekennzeichnet, daß der Deichselkopf (10) aus einem über Schraubverbindungen verbindbaren Ober- und Unterteil (106, 104) zusammengesetzt ist, wobei das Unterteil (104) die Griffe (38, 40), die Schenkelabschnitte (34, 36), tragende Teile (26', 28') der Trägerabschnitte (26, 28) sowie Aufnahmen für die Fahrschalter (34, 36) und der Schutztaste (24) bzw. den tragenden Teil (18') des Horns (18) aufweist und das schalenartige Oberteil (106) die Oberseite des Horns (18) bildet sowie einen Teil (26'', 28") der Tragabschnitte (26, 28) einschließlich der die Schalttasten (80, 82) tragenden Fläche (66, 68).

21. Deichsel nach Anspruch 20, dadurch gekennzeichnet, daß Unterteil (104) und/oder Oberteil (106) einteilig aus Kunststoff geformt sind.

22. Deichsel nach Anspruch 20 oder 21, dadurch gekennzeichnet, daß Griffe (38, 40), Schenkelabschnitte (34, 36) und/oder tragende Teile (26', 28') der Trägerabschnitte hohl sind.

23. Deichsel nach einem der Ansprüche 20 bis 22, dadurch gekennzeichnet, daß der tragende Teil (18') des Horns einen buchsenförmigen Ansatz (112) zur Aufnahme einer Verbindungsschraube aufweist.

24. Deichsel nach einem der Ansprüche 20 bis 23, dadurch gekennzeichnet, daß der tragende Teil (18') des Horns über zwei beabstandete Stege (25, 27) an den tragenden Teilen (26', 28') der Trägerabschnitte angebunden ist.

25. Deichsel nach einem der Ansprüche 1 bis 24, dadurch gekennzeichnet, daß die von den Schalttasten (80, 82) betätigten Schalter Proportionalschalter sind.

## Claims

1. A steering bar for a power operated industrial truck with a steering bar butt (12), with a steering bar head (10) arranged at the free end of the steering bar butt (12), consisting of a horn (18) arranged in the extension of the steering bar butt (12), of rod-like grips (38, 40) extending on both sides of the horn (18) approximately transversely to the horn (18), of a drive switch grip (46, 48) which is pivotably mounted on the horn and which comprises a depression (86) facing away from the grip for actuation with by the thumb, wherein the grips (38, 40), via limb sections (34, 36) joined at the outer ends of the grips (38, 40) and extending approximately parallel to the horn (18) and via carrier sections (26, 28) connected to the limb sections (34, 36), are connected to the horn (18) and the butt (12), and the limb and carrier sections form a protective bow with grip openings (50, 52), and of at least two switch buttons (80, 82) on each side of the horn (18) which are attached in surfaces (66, 68) of the carrier sections (26, 28), which inclined to the vertical obliquely fall off in the direction of the grips (38, 40), characterised in that the surfaces (66, 68) of the carrier sections (26, 28) also fall off towards the side, the switch buttons (80, 82) are arranged in a row next to one another and the switch button rows (80, 82) on both sides of the horn (18) are arranged at an obtuse angle in a manner such that they converge in the direction of the grips (38, 40) in order to permit an ergonomically favourable actuation.

2. A steering bar according to claim 1, characterised in that there are provided rectangular touch buttons (80, 82) which directly neighbouring protrude slightly from the surface (66, 68).

3. A steering bar according to claim 1 or 2, characterised in that three switch buttons (80, 82) are arranged on each side of the horn (18).

4. A steering bar according to one of the claims 1 to 3, characterised in that the surfaces are formed by a depression (66, 68) extending between the horn (18) or the butt (12) and the limb section (34, 36).

5. A steering bar according to claim 4, characterised in that the approximately straight depression edge (70, 72) proximal to the handle (38, 40) at the same time limits the grip opening (50, 52) on the side of the carrier section (26, 28) and the switch buttons (80, 82) are arranged near to the depression edge (70, 72).

6. A steering bar according to one of the claims 1 to 5, characterised in that the axes of the switch buttons on one side of the horn (18) converge upwardly, preferably to a point which corresponds to the circle centre for the circle on which the button lies or which describes the depression.

7. A steering bar according to one of the claims 1 to 6, characterised in that the upper section (20) of the horn (18) is raised beyond the plane formed by the grip (38, 40) and the limb sections (34, 36), and the switch button (80, 82) lying closest to the horn (18) approximately borders on the upper side (20) of the horn (18).

8. A steering bar according to one of the claims 1 to 7, characterised in that the carrier sections (26, 28) are formed as projections of the horn (18), which are rounded in cross section and continuously taper away from the horn (18).

9. A steering bar according to claim 8, characterised in that the carrier sections (26, 28) on the side lying opposite the grip opening (50, 52) are bent convexly and in cross section are rounded in an approximately circular manner.

10. A steering bar according to one of the claims 1 to 8, characterised in that the arm sections (34, 36) towards the grip opening (50, 52) have a rounded cross section which towards the outside comprises a flattening (42, 44).

11. A steering bar according to one of the claims 1 to 10, characterised in that in that the carrier sections (26, 28) have a rounded cross section towards the grip opening (50, 52).

12. A steering bar according to one of the claims 1 to 11, characterised in that the outer lying sections of the carrier sections (26, 28) are arranged at an obtuse angle to one another such that they diverge in the direction of the grips (38, 40).

13. A steering bar according to one of the claims 1 to 12, characterised in that the grips (38, 40) run on a curved line whose circle centre lies on the side proximal to the butt (12).

14. A steering bar according to one of the claims 1 to 13, characterised in that the plane of the grip (38, 40) and the limb section (34, 36) in the operating position of the butt (12) is inclined obliquely downwards away from the grip (38, 40).

15. A steering bar according to one of the claims 1 to 14, characterised in that the upper side of the drive switch grip (46, 48) and the side facing away from the operator comprises a rest surface (98) curved in the rotational direction of the drive switch grip, for the index finger of the hand grasping the grip (38, 40).

16. A steering bar according to claim 15, characterised in that the rest surface (98) forms an extension of the grip (38, 40) rising towards the horn (18).

17. A steering bar according to one of the claims 1 to 16, characterised in that the drive switch grip (46, 48) on the side proximal to the operator comprises a thumb depression (86) whose floor wall section facing upwards is narrower than the floor section facing downwards, and the lateral limiting of the drive switch grip (46, 48) in the region of the narrow floor wall section is formed by an oblique surface (100) with a descent in the direction of the grip (38, 40).

18. A steering bar according to one of the claims 1 to 16, characterised in that the free end of the grip (38, 40) is semi-spherical and projects into an approximately semi-spherical recess of the drive switch grip (46, 48).

19. A steering bar according to one of the claims 1 to 18, characterised in that a section of the horn (18) projects beyond the drive switch grip (46, 48) and into the end face of the projecting section a switch cap (24) for a body protect switch is inserted.

20. A steering bar according to one of the claims 1 to 19, characterised in that the steering bar head (10) is composed of an upper part and a lower part (106, 104) connectable via screw connections, wherein the lower part (104) comprises the grips (38, 40), the limb sections (34, 36), carrying parts (26', 28') of the carrier sections (26, 28) as well as receivers for the drive switch (34, 36) and the protect button (24) or for the carrying part (18') of the horn (18), and the shell-shaped upper part (106) forms the upper side of the horn (18) as well as a part (26", 28") of the carrier sections (26, 28) including the surface (66, 68) carrying the switch buttons (80, 82).

21. A steering bar according to claim 20, characterised in that the lower part (104) and/or the upper part (10) are formed as one piece from plastic.

22. A steering bar according to claim 20 or 21, characterised in that grips (38, 40), the limb sections (34, 36) and/or carrying parts (26', 28') of the carrier sections are hollow.

23. A steering bar according to one of the claims 20 to 22, characterised in that the carrying part (18') of the horn comprises a sleeve-like projection (112) for receiving a connection screw.

24. A steering bar according top one of the claims 20 to 23, characterised in that the carrying part (18') of the horn is joined via two distanced webs (25, 27) to the carrying parts (26', 28') of the carrier sections.

25. A steering bar according to one of the claims 1 to 24, characterised in that the switches actuated by the switch buttons (80, 82) are proportional switches.

## Revendications

1. Timon pour chariots de manutention à moteur, comportant un manche (12) de timon, une tête (10) de timon placée à l'extrémité libre du manche (12) de timon, composé d'une corne (18) placée dans le prolongement du manche (12) de timon, des poignées (38, 40) en forme de tiges s'étendant des deux côtés de la corne (18) approximativement perpendiculairement à la corne (18), une poignée de commande (46, 48) placée en pouvant pivoter sur la corne, et qui comporte une cavité (86) orientée hors de la poignée pour commande avec le pouce, les poignées (38, 40) étant reliées à la corne (18) ou au manche (12) par des parties de bras (34, 36) attachées aux extrémités extérieures des poignées (38, 40) et s'étendant approximativement parallèlement à la corne (18) et par des parties de support (26, 28) reliées aux parties de bras (34, 36), et les parties de bras et les parties de support formant un étrier de protection avec des ouvertures de poignées (50, 52), au moins deux touches de commande (80, 82) de chaque côté de la corne (18), qui sont placées dans des surfaces (66, 68) des parties de support (26, 28) tombant inclinées par rapport à la verticale obliquement en direction des poignées (38, 40), caractérisé en ce que les surfaces (66, 68) des parties de support (26, 28) tombent également vers le côté, les touches de commande (80, 82) sont disposées en rangée l'une à côté de l'autre et les rangées de touches de commande (80, 82) sont disposées des deux côtés de la corne (18) en formant un angle obtus de telle manière qu'elles convergent en direction des poignées (38, 40) pour rendre possible une commande ergonomiquement favorable.

2. Timon selon la revendication 1, caractérisé en ce qu'il est prévu des boutons-poussoirs rectangulaires (80, 82) qui font légèrement saillie de la surface (66, 68) sur une faible distance.

3. Timon selon la revendication 1 ou 2, caractérisé en ce que trois touches de commande (80, 82) sont placées de chaque côté de la corne (18).

4. Timon selon l'une des revendications 1 à 3, caractérisé en ce que les surfaces sont formées par une cavité (66, 68) s'étendant entre la corne (18) ou le manche (12) et la partie de bras (34, 36).

5. Timon selon la revendication 4, caractérisé en ce que l'arête (70, 72) approximativement droite de la cavité tournée vers la poignée (38, 40) limite en même temps l'ouverture (50, 52) de la poignée du côté de la partie de suppport (26, 28) et que les touches de commande (80, 82) sont placées près de l'arête (70, 72) de la cavité.

6. Timon selon l'une des revendications 1 à 5, caractérisé en ce que les axes des touches de commande convergent vers le haut sur un côté de la corne (18), de préférence en un point qui correspond au centre du cercle sur lequel se trouve la touche ou que décrit la cavité.

7. Timon selon l'une des revendications 1 à 6, caractérisé en ce que la partie supérieure (20) de la corne (18) est convexe au-dessus du plan formé par la poignée (38, 40) et les parties de bras (34, 36) et que la touche de commande (80, 82) la plus proche de la corne (18) est approximativement adjacente à la face supérieure (20) de la corne (18).

8. Timon selon l'une des revendications 1 à 7, caractérisé en ce que les parties de support (26, 28) ont la forme de rallonges de section transversale arrondie de la corne (18) qui s'amincissent régulièrement en s'éloignant de la corne (18).

9. Timon selon la revendication 8, caractérisé en ce que les parties de support (26, 28) ont une forme convexe sur la face opposée à l'ouverture (50, 52) de la poignée et ont une section transversale arrondie approximativement circulaire.

10. Timon selon l'une des revendications 1 à 8, caractérisé en ce que les parties de bras (34, 36) comportent vers l'ouverture (50, 52) de la poignée une section transversale arrondie qui présente un aplatissement (42, 44) vers l'extérieur.

11. Timon selon l'une des revendications 1 à 10, caractérisé en ce que les parties de support (26, 28) comportent une section transversale arrondie vers l'ouverture (50, 52) de la poignée.

12. Timon selon l'une des revendications 1 à 11, caractérisé en ce que les parties situées à l'extérieur des parties de support (26, 28) font entre elles un angle obtus tel qu'elles divergent en direction des poignées (38, 40).

13. Timon selon l'une des revendications 1 à 12, caractérisé en ce que les poignées (38, 40) suivent une ligne courbe circulaire dont le centre est situé sur la face adjacente au manche (12).

14. Timon selon l'une des revendications 1 à 13, caractérisé en ce que le plan de la poignée (38, 40) et de la partie de bras (34, 36) est, dans la position de travail du manche (12), incliné obliquement vers le bas en partant de la poignée (38, 40).

15. Timon selon l'une des revendications 1 à 14, caractérisé en ce que la face supérieure et la face s'éloignant de l'utilisateur de la poignée de commande (46, 48) comportent une surface réceptrice (98)courbée dans le sens de rotation de la poignée du contrôleur pour l'index de la main qui entoure la poignée (38, 40).

16. Timon selon la revendication 15, caractérisé en ce que la surface réceptrice (98) forme un prolongement de la poignée (38, 40) montant vers la corne (18).

17. Timon selon l'une des revendications 1 à 16, caractérisé en ce que la poignée de commande (46, 48) comporte une cavité (86) pour le pouce sur la face tournée vers l'utilisateur, dont la partie de paroi de fond regardant vers le haut est plus étroite que la partie de fond regardant vers le bas et en ce que la limitation latérale de la poignée de commande (46, 48) est formée, dans la zone de la paroi de fond étroite, par une surface oblique (100) avec une pente en direction de la poignée (38, 40).

18. Timon selon l'une des revendications 1 à 16, caractérisé en ce que l'extrémité libre de la poignée (38, 40) a une forme hémisphérique et est située dans un évidement approximativement hémisphérique à l'intérieur de la poignée de commande (46, 48).

19. Timon selon l'une des revendications 1 à 18, caractérisé en ce qu'une partie de la corne (18) est en saillie par rapport à la poignée de commande (46, 48) et qu'un capuchon interrupteur (24) est inséré dans la face avant de la partie en saillie pour un disjoncteur de protection des personnes.

20. Timon selon l'une des revendications 1 à 19, caractérisé en ce que la tête (10) de timon est composée d'une partie supérieure (106) et d'une partie inférieure (104) raccordables par des assemblages par vis, la partie inférieure (104) comportant les poignées (38, 40), les parties de bras (34, 36), des pièces porteuses (26', 28') des parties de support (26, 28) ainsi que des logements pour les manipulateurs (34, 36) et la touche de protection (24) ou la partie porteuse (18') de la corne (18) et la partie supérieure en coque (106) formant la face supérieure de la corne (18) ainsi qu'une pièce (26'', 28'') des parties de support (26, 28), y compris les surfaces (66, 68) portant les touches de commande (80, 82).

21. Timon selon la revendication 20, caractérisé en ce que la partie inférieure (104) et/ou la partie supérieure (106) sont formées d'une seule pièce en matière synthétique.

22. Timon selon l'une des revendications 20 ou 21, caractérisé en ce que les poignées (38, 40), les parties de bras (34, 36) et/ou les pièces porteuses (26', 28') des parties de support sont creuses.

23. Timon selon l'une des revendications 20 à 22, caractérisé en ce que la partie porteuse (18') de la corne comporte une pièce rapportée en forme de douille (112) destinée à recevoir une vis d'assemblage.

24. Timon selon l'une des revendications 20 à 23, caractérisé en ce que la partie porteuse (18') de la corne est reliée par deux traverses écartées l'une de l'autre (25, 27) aux pièces porteuses (26', 28') des parties de support.

25. Timon selon l'une des revendications 1 à 24, caractérisé en ce que les commutateurs actionnés par les touches de commande (80, 82) sont des commutateurs proportionnels.
